# EUROPÄISCHE PATENTANMELDUNG

(11) **EP 2 987 733 A1**
(43) Veröffentlichungstag der Anmeldung: **24.02.2016**
(21) Anmeldenummer: 14181667.8
(22) Anmeldetag: 20.08.2014
(51) Int. Cl.: B65B 3/02, B29C 49/12, B29C 49/46, B29C 49/06

(54) **Vorrichtung und Verfahren zur Formung eines Kunststoffbehälters**

(71) Anmelder: Krones AG, 93073 Neutraubling (DE)
(72) Erfinder: Albrecht, Thomas, 93073 Neutraubling (DE)
(74) Vertreter: Grünecker Patent- und Rechtsanwälte PartG mbB

(57) **Zusammenfassung**

Die Erfindung betrifft eine Behandlungsstation (30) zur Formung eines Kunststoffbehälters, umfassend: eine Hohlform (31) zum Aufwärmen eines erwärmten Kunststoffvorformlings, und eine mechanische Spreizeinrichtung (33, 34) zum Spreizen eines in der Hohlform (31) aufgenommenen Kunststoffvorformlings, womit aus dem Kunststoffvorformling eine Zwischenform (32) ausbildbar ist. Die Erfindung betrifft weiterhin eine Formfüllmaschine mit einer derartigen Behandlungsstation. Darüber hinaus betrifft die Erfindung ein Verfahren zum Formen eines Kunststoffbehälters, umfassend die Schritte: Positionieren eines erwärmten Kunststoffvorformlings in einer Hohlform, Einführen einer mechanischen Spreizvorrichtung in den positionierten Kunststoffvorformling, und Spreizen des Kunststoffvorformlings mit der Spreizeinrichtung, wodurch eine Zwischenform ausgebildet wird.

## Beschreibung

### Gebiet der Erfindung

Die Erfindung betrifft eine Behandlungsstation zur Formung eines Kunststoffbehälters, die eine Hohlform zum Aufnehmen eines erwärmten Kunststoffvorformlings umfasst, sowie eine Formfüllmaschine mit einer derartigen Behandlungsstation. Weiterhin betrifft die Erfindung ein Verfahren zum Formen eines Kunststoffbehälters, welches ein Positionieren eines erwärmten Kunststoffvorformlings in einer Hohlform umfasst.

### Stand der Technik

Bekanntermaßen lassen sich Kunststoffbehälter im Streckblasverfahren aus Vorformlingen herstellen.

Alternativ zu einem Aufblasen der Behälter mit Druckluft, beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform gebracht und dort in Längsrichtung gereckt. Es wird ferner Mineralwasser oder dergleichen unter Überdruck eingeleitet, um die endgültige Behälterform herzustellen. Das Mineralwasser verbleibt im Behälter, sodass ein nachfolgender separater Abfüllschritt entbehrlich ist.

Die US 2011/0031659 A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter geweitet wird. Danach wird das Fluid durch Pressluft verdrängt und läuft aus dem Behälter ab.

Aufgabe der vorliegenden Erfindung ist es, bekannte Vorrichtungen und Verfahren zum Ausformen und Füllen von Kunststoffbehältern in vorteilhafter Weise weiterzubilden.

Eine Formfüllmaschine umfasst definitionsgemäß wenigstens eine Behandlungsstation zum expandierenden Umformen von Kunststoffvorformlingen zu Kunststoffbehältern in einer Hohl-form und zum Einfüllen eines im Wesentlichen flüssigen Produkts oder wenigstens einer flüssigen oder festen Komponente des Produkts in die Kunststoffbehälter.

Flüssigkeiten, auch solche mit darin gelöstem Kohlendioxid oder dergleichen, sind definitionsgemäß hinsichtlich ihrer Funktion beim Ausformen und Füllen der Behälter inkompressible Fluide im Gegensatz zu Gasen, die funktional als kompressible Fluide definiert sind.

Der herkömmliche Streckblasprozess gliedert sich nach dem Stand der Technik in zwei Phasen, das sogenannte Vorblasen bei dem der Vorformling gereckt und unter Druckluftzufuhr unter einem ersten Vorblasdruck zu einer Blase geformt wird und das sogenannte Fertigblasen, bei dem die vorgeblasene Flasche unter einem höheren Druckluftniveau fertig ausgeformt wird. Nachteilig ist dabei, dass das Vorblasen auf diese Weise häufig nicht zu einer definierten Größe und Form der Vorblase führt. Weiterhin ist Druckluft ein sehr teures Prozessmedium, weshalb eine Reduzierung seines Verbrauchs angestrebt wird.

### Beschreibung der Erfindung

Daher ist es Aufgabe der Erfindung, die Nachteile nach dem Stand der Technik zu überwinden, insbesondere das undefinierte Ausbilden der Vorblase zu vermeiden und die Geometrie der Vorblase unabhängig vom Temperaturprofil in dem Kunststoffvorformling definiert auszubilden.

Diese Aufgabe wird gelöst durch eine Behandlungsstation zur Formung eines Kunststoffbehälters nach Anspruch 1. Vorteilhafte Ausführungsformen der Erfindung sind in den Unteransprüchen definiert.

Die erfindungsgemäße Behandlungsstation zur Formung eines Kunststoffbehälters umfasst eine Hohlform zum Aufnehmen eines erwärmten Kunststoffvorformlings und ist gekennzeichnet durch eine mechanische Spreizeinrichtung zum Spreizen eines in der Hohlform aufgenommenen Kunststoffvorformlings, womit aus dem Kunststoffvorformling eine Zwischenform ausbildbar ist.

Der erwärmte Kunststoffvorformling wird durch die mechanische Spreizeinrichtung auf diese Weise in eine definierte Form, nämlich die Zwischenform, aufgespreizt. In die so entstandene Vorblase kann dann direkt das unter Druck stehende Produkt gefüllt werden. Durch den Druck wird die Blase weiter gedehnt, bis sie an der Wand der Hohlform anliegt und die Flaschenkontur abbildet. Vorteil der Erfindung ist es, dass sich der aufgeheizte Kunststoff weniger lange mit dem Produkt in Kontakt befindet, welches eine Temperatur aufweist, die unter der Temperatur des Kunststoffvorformlings liegt. Ferner ist es vorteilhaft, dass die Vorblase mechanisch erzeugt wird, da sie so unabhängig vom einströmenden Medium ist und sich somit definiert ausbildet. Eine Weiterbildung der erfindungsgemäßen Behandlungsstation besteht darin, dass die mechanische Spreizeinrichtung an einer Reckstange oder an einem Füllrohr angeordnet sein kann, wobei die Reckstange oder das Füllrohr in den Kunststoffvorformling einführbar ist und die Reckstange zum Recken des Kunststoffvorformlings in axialer Richtung der Reckstange ausgebildet ist. Auf diese Weise wird vermieden, die mechanische Spreizeinrichtung in einem separaten Schritt in den Kunststoffvorformling einzuführen, da eine Reckstange oder ein Füllrohr in jedem Fall einzuführen ist.

Die mechanische Spreizeinrichtung kann mehrere Spreizelemente aufweisen, die jeweils in unterschiedliche Richtungen bewegbar sind, wobei die Spreizelemente insbesondere Drähte, vorzugsweise aus Metall, höchst vorzugsweise aus Federstahl, umfassen. Alternativ oder zusätzlich können die Spreizelemente ein Gestänge umfassen, insbesondere aus Metall oder Kunststoff. Die Spreizelemente können auch elastisch biegsame Streifen auf Metall oder Kunststoff umfassen.

Die Spreizelemente sind bevorzugt in unterschiedlicher radialer Richtung in Bezug auf eine Achse des Kunststoffvorformlings oder in Bezug auf eine Achse der Spreizeinrichtung bewegbar. Auf diese Weise wird ein radiales Aufweiten des Kunststoffvorformlings erzielt. Die Verwendung von Drähten als Teil der Spreizeinrichtung hat weiterhin den Vorteil, dass sich an den Kontaktstellen der Drähte mit dem Kunststoff Vertiefungen, sog. Sicken, ausbilden, die nach einem abschließenden Schritt des Aufweitens der Zwischenform auf die Endform als Versteifungsrippen ausgebildet sein können, was die axiale Belastungsfähigkeit der Flasche erhöht.

Die mechanische Spreizeinrichtung kann eine oder mehrere Schiebehülsen umfassen, womit durch ein Verschieben der Schiebehülse bzw. Schiebehülsen eine Bewegung der Spreizeinrichtung ausführbar ist, die eine radiale Komponente umfasst, wobei die Schiebehülsen insbesondere auf der Reckstange oder dem Füllrohr angeordnet sein können und wobei die jeweiligen Enden der Spreizelemente an der Schiebehülse befestigt sein können. Zudem können die gegenüberliegenden Enden der Spreizelemente an einer Reckstangenkuppe befestigt sein.

Die Behandlungsstation kann weiterhin zum Einfüllen eines im Wesentlichen flüssigen Produkts oder wenigstens einer flüssigen oder festen Komponente des Produkts in die Zwischenform ausgebildet sein, wobei gleichzeitig eine durch die Hohlform vorgegebene Endform des Kunststoffbehälters aus der Zwischenform ausgebildet wird.

Eine erfindungsgemäße Formfüllmaschine umfasst eine erfindungsgemäße Behandlungsstation zur Formung eines Kunststoffbehälters oder eine deren Weiterbildungen, die oben beschrieben sind, sowie insbesondere einen Ofen zum Erwärmen des Kunststoffvorformlings.

Die oben bezeichnete Aufgabe wird weiterhin gelöst durch ein Verfahren zum Formen eines Kunststoffbehälters, das die folgenden Schritte umfasst: Positionieren eines erwärmten Kunststoffvorformlings in einer Hohlform, Einführen einer mechanischen Spreizvorrichtung in den positionierten Kunststoffvorformling und Spreizen des Kunststoffvorformlings mit der Spreizeinrichtung, wodurch eine Zwischenform ausgebildet wird.

Das Spreizen des Kunststoffvorformlings kann in mehrere unterschiedliche radiale Richtungen in Bezug auf eine Achse des Kunststoffvorformlings oder der Spreizeinrichtung erfolgen.

Das Verfahren kann ein Recken des Kunststoffvorformlings in axialer Richtung einer Reckstange umfassen.

Das Spreizen des Kunststoffvorformlings kann ein Ausbilden von einer oder mehreren Sicken in der Zwischenform umfassen.

Das Verfahren kann die folgenden weiteren Schritte umfassen: Einfüllen eines im Wesentlichen flüssigen Produkts oder wenigstens einer flüssigen oder festen Komponente des Produkts in die Zwischenform, wodurch gleichzeitig die Endform des Kunststoffbehälters aus der Zwischenform ausgebildet wird, wobei aus der bzw. den Sicken bevorzugt ein oder mehrere Versteifungsrippen in der Endform des Kunststoffbehälters ausgebildet werden.

Die in Bezug auf die Behandlungsstation angegebenen Vorteile der Erfindung gelten entsprechend für das erfindungsgemäße Verfahren bzw. deren Weiterbildungen.

Die genannten Weiterbildungen können einzeln eingesetzt oder wie beansprucht geeignet miteinander kombiniert werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Zeichnungen

- Fig. 1: zeigt eine Formfüllmaschine nach dem Stand der Technik.
- Fig. 2: zeigt einen Querschnitt durch eine Behandlungsstation der Formfüllmaschine nach Fig. 1.
- Fig. 3: zeigt eine erfindungsgemäße Behandlungsstation.

### Ausführungsformen

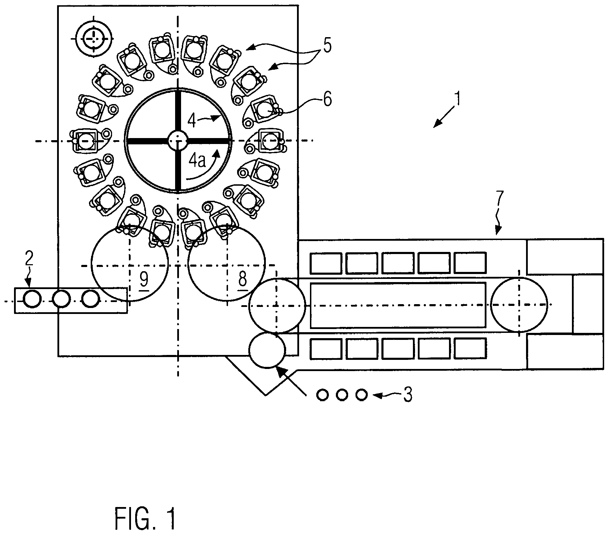

Fig. 1 zeigt eine Formfüllmaschine 1 nach dem Stand der Technik.

Als Bestandteile der Formfüllmaschine sind gezeigt: Behälter 2, Vorformling 3, Karussell 4 (mit kontinuierlicher Transportbewegung 4a), Behandlungsstation 5, Hohlform 6, Ofen 7, Einlaufstern 8 und Auslaufstern 9.

Insbesondere sind als Behandlungsstationen eine Vielzahl von Form- und Füllstationen vorgesehen, welche insbesondere am Außenumfang eines sich kontinuierlich drehenden Rundläufers angeordnet sind. Bei dem Rundläufer handelt es sich vorzugsweise um ein Rad.

Insbesondere sind die Stationen alle in äquidistanten Abständen zueinander angeordnet. Die Stationen weisen insbesondere Kavitäten auf, innerhalb derer die Behälter gegen die inneren Wände der Kavität expandiert werden, so dass die fertig ausgeformten Behälter die (negative) Form der inneren Wände der Kavität erhalten.

Insbesondere ist daran gedacht, die Behälter noch innerhalb dieser Kavität zu verschließen. Hierfür kann an der Peripherie des Rundläufers eine Verschlusszuführung angeordnet sein.

Insbesondere findet die Herstellung bzw. Expansion und das Befüllen der Behälter innerhalb eines Raums mit kontaminationsarmer Umgebung transportiert. Die kontaminationsarme Umgebung, bei der es sich insbesondere um einen Reinraum handelt, kann durch eine oder durch eine Kombinationen der folgenden Maßnahmen hergestellt werden:
- Die kontaminationsarme Umgebung der Vorrichtung (innerhalb eines Maschinenschutzes) wird unter einen Überdruck im Vergleich zur Umgebungsatmosphäre gesetzt, indem durch Feinfilter filtrierte Luft zumindest während der Produktion in den Raum eingeblasen wird
- Die Antriebe für verschiedenste Bewegungen der Kavität sind außerhalb des Reinraums angeordnet, so beispielsweise die Antriebe für das Öffnen und Schließen der Kavität (Form) und/oder die für das Bewegen einer Reckstange und/oder die für ein Anheben oder senken eines Behälters und/oder die die Bewegung einer Blas- oder Fülldüse
- Die innere Wandung des Raums wird in regelmäßigen Abständen gereinigt und/oder sterilisiert, beispielsweise über ein Bespritzen oder Bedampfen mit Lauge, Säure, Entkeimungsflüssigkeit, Wasserstoffperoxid (gasförmig oder flüssig). Insbesondere werden bei der Reinigung und/oder Sterilisation die Innen- und Außenseiten der Kavitäten, Blas- oder Fülldüsen und der Reckstangen miteinbezogen. Insbesondere werden aber auch die inneren Wandungen des Maschinenschutzes einbezogen.
- Die kontaminationsarme Umgebung wird gegen die Umgebungsatmosphäre abgedichtet. Bei einem Rundläufer kann es sich bei der Dichtung um ein Wasserschloss oder eine Gummidichtung handeln, welche(s) den drehenden Teil zum stehenden Teil der Vorrichtung abdichtet.

Insbesondere werden die Behälter bzw. Vorformlinge vor einem Einbringen in die kontaminationsarme Umgebung sterilisiert.

Insbesondere wird der Behälter auf ein und demselben Karussell (Rundläufer) expandiert und mit dem zu verpackenden Endprodukt befüllt.

Insbesondere handelt es sich bei den Behältern vor dem Expandieren um Kunststoffvorformlinge, die bevorzugt die Form eines Reagenzglases aufweisen bzw. eine einzige Öffnung aufweisen. In der Nähe dieser Öffnung befindet sich ein Mündungsbereich, welcher beispielsweise mit einem schon im Spritzgussverfahren angeformten Gewinde für einen Verschluss versehen wurde. Zusätzlich kann im Mündungsbereich ein Tragring vorgesehen sein, welcher zum Transport vorgesehen ist.

In Transportrichtung der Behälter stromaufwärts kann eine Erwärmungseinrichtung vorgesehen sein, welche die kalt angelieferten Vorformlinge erwärmt. Als Erwärmungseinrichtung kann ein Infrarotofen dienen, durch welchen die Vorformlinge transportiert werden. An zumindest einer Seite einer tunnelförmigen Heizstrecke durch den Ofen sind insbesondere Infrarotstrahler angeordnet. Anstatt des Infrarotofens kann auch eine Mikrowellenerwärmungseinrichtung vorgesehen sein, in der insbesondere für jeden Vorformling individuell zugeordnete Kavitäten zur Erwärmung angeordnet sind. Während es sich beim Mikrowellenofen bevorzugt um einen Rundläufer handelt, werden die Vorformlinge beim Infrarotofen zumindest einen Teil der Strecke geradlinig transportiert.

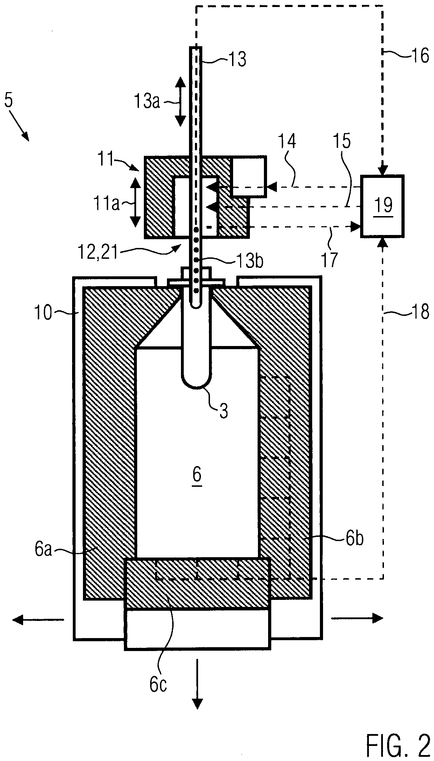

Anstatt der eben beschriebenen Verfahren und Vorrichtungen können die Vorformlinge auch direkt von einer stromaufwärts angeordneten Spritzgussvorrichtung erzeugt und im noch aufgewärmten Zustand weiter an die Form- und Füllvorrichtung weitertransportiert werden. Energetisch gesehen bietet das den Vorteil, dass ein Teil der Wärme nicht an die Umgebung verloren geht. U.U. muss jedoch noch eine Zwischenkonditioniereinrichtung vorgesehen werden, welche die Vorformlinge nur geringfügig temperiert (kleiner als plus oder minus 50°C) bzw. ein Temperaturprofil aufbringt. Werden die Vorformlinge innerhalb eines Reinraums spritzgegossen, so ist u.U. keine weitere Sterilisation dieser nötig, wenn sich der Reinraum bis zu einer Position hin erstreckt, an der ein Verschluss auf den Behälter nach dem Befüllen aufgebracht wird.Fig. 2 zeigt die Behandlungsstation 5 der Formfüllmaschine 1 nach Fig. 1 im Detail.

Die Behandlungsstation 5 umfasst: Formteile 6a-6c der Hohlform 6, einen mehrteiligen Formträger 10, Ventilkopf 11 (mit einem Hub 11a der Ventileinheit bezüglich der Hohlform), Fluiddüse 12 (entsprechend einer Blasdüse), eine Reckstange 13 (mit Kanal), wobei ein Hub der Reckstange bezüglich der Ventileinheit mit 13a bezeichnet ist, und wobei Öffnungen (für Absaugung des Formfluids, gegebenenfalls auch für Versorgung mit Form-fluid/Produktkomponenten) mit 13b bezeichnet sind, eine Zuleitung 14 für das Formfluid (mit Ventil), eine Zuleitung 15 für das Produkt (mit Ventil), eine hydraulische Absaugleitung 16 für das Formfluid (mit Ventil), eine pneumatische Absaugleitung 17 für den Innenraum des Behälters beim Füllen (mit Ventil), eine pneumatische Absaugleitung 18 für die Hohlform/Außenseite des Behälters beim Füllen (mit Ventil), einen Medienverteiler 19 (gemeinsamer Drehverteiler für die Behandlungsstationen), und einem Kompressor 20 für das Formfluid.

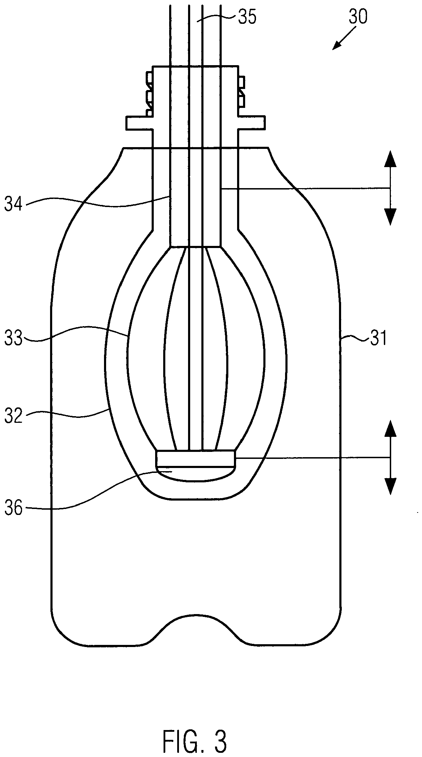

Fig. 3 zeigt eine Ausführungsform der erfindungsgemäßen Behandlungsstation 30.

Die Behandlungsstation 30 zur Formung eines Kunststoffbehälters umfasst eine Hohlform 31 zum Aufnehmen eines erwärmten Kunststoffvorformlings und eine mechanische Spreizeinrichtung 33, 34 zum Spreizen des Kunststoffvorformlings. Mit der mechanischen Spreizeinrichtung wird aus dem Kunststoffvorformling eine Zwischenform 32 ausgebildet.

In dieser Ausführungsform umfasst die mechanische Spreizeinrichtung mehrere Drähte 33 und eine Hülse 34, die an einer Reckstange 35 angeordnet sind. Die Reckstange 35 weist weiterhin eine Reckstangenkuppe 36 auf, mit der der Kunststoffvorformling in axialer Richtung gereckt werden kann.

Die Drähte 33 sind aus einem Federstahl ausgebildet und ein Ende der Drähte ist an der Reckstangenkuppe 36 befestigt. Das andere Ende der Drähte 33 ist an der Hülse 34 befestigt, wobei die Hülse 34 relativ zur Reckstangenkuppe 36 bewegt werden kann. Auf diese Weise kann die Reckstange 35 mit der mechanischen Spreizeinrichtung in den Kunststoffvorformling eingeführt werden, wenn die Drähte 33 entspannt sind und in radialer Richtung wenig Raum einnehmen.

Nach dem Einführen kann dann beispielsweise die Hülse 34 in Richtung der Reckstangenkuppe 36 verschoben werden, wodurch sich die Drähte 33 radial nach außen biegen und sich die gesamte Anordnung der Drähte 33 radial in Bezug auf die Symmetrieachse der Reckstange aufweitet. Die Drähte 33 kommen auf diese Weise zunächst in Kontakt mit dem erwärmten Kunststoffvorformling und verformen ihn anschließend zu einer Zwischenform 32.

Danach können die Drähte 33 durch Wegbewegen der Hülse 34 von der Reckstangenkuppe 36 wieder entspannt werden und aus der Zwischenform 32 entfernt werden.

Anschließend kann ein Füllrohr in die Zwischenform 32 eingeführt werden und ein unter Druck stehendes Produkt eingefüllt werden. Durch diesen Druck wird die Zwischenform weiter gedehnt, bis sie an der Hohlform 31 anliegt und die endgültige Flaschenkontur ausbildet. Das Füllrohr wird dann wieder entfernt und die befüllte und in Endform ausgebildete Flasche wird aus der Behandlungsstation ausgeleitet.

Gegenstand dieser Erfindung ist es also mit anderen Worten, die Vorblase (Zwischenform) mechanisch durch ein Gestänge auszubilden. Dabei werden dünne Metalldrähte bevorzugt aus Federstahl über eine oder mehrere Schiebehülsen die sich auf dem Reckdorn oder Füllrohr befinden so verformt, dass sie sich radial aufspreizen. In die so entstandene Vorblase kann dann direkt das unter Druck stehende Produkt gefüllt werden. Durch den Druck (z.B.: ca. 35-40bar) wird die Blase weiter gedehnt bis sie an der Flaschenwand anliegt und die Flaschenkontur abbildet. Vorteil der Erfindung ist es, dass sich das aufgeheizte PET (Kunststoff) weniger lang mit dem Produkt in Kontakt befindet welches eine Temperatur hat, die unter der Temperatur des Vorformlings liegt. Ferner ist es vorteilhaft wenn die Vorblase mechanisch erzeugt wird, da sie so unabhängig ist vom einströmenden Medium und sich definiert ausbildet. Durch das definierte Ausbilden der Vorblase, lässt sich vorteilhaft auch die Wanddickenverteilung steuern, da besonders in der Vorblasphase Einfluss auf die Wandstärke des Behälters Einfluss genommen wird. Außerdem ist es möglich, dass sich an den Kontaktstellen der Drähte mit dem PET auf der Flascheninnenseite eine Art Versteifungsrippe ausbildet, welche die axiale Belastungsfähigkeit der Flasche erhöht.

## Patentansprüche

1. Behandlungsstation (30) zur Formung eines Kunststoffbehälters, umfassend:
eine Hohlform (31) zum Aufnehmen eines erwärmten Kunststoffvorformlings;
**gekennzeichnet durch**
eine mechanische Spreizeinrichtung (33, 34) zum Spreizen eines in der Hohlform (31) aufgenommenen Kunststoffvorformlings (32), womit aus dem Kunststoffvorformling eine Zwischenform (32) ausbildbar ist.

2. Behandlungsstation nach Anspruch 1, wobei die mechanische Spreizeinrichtung an einer Reckstange (35) oder an einem Füllrohr angeordnet ist, die bzw. das in den Kunststoffvorformling einführbar ist, wobei die Reckstange zum Recken des Kunststoffvorformlings in axialer Richtung der Reckstange ausgebildet ist.

3. Behandlungsstation nach Anspruch 1 oder 2, wobei die mechanische Spreizeinrichtung mehrere Spreizelemente (33) aufweist, die jeweils in unterschiedliche Richtungen bewegbar sind, wobei die Spreizelemente insbesondere ein Gestänge oder Drähte (33), vorzugsweise aus Metall, höchst vorzugsweise aus Federstahl, umfassen, und wobei die Spreizelemente bevorzugt in unterschiedliche radiale Richtungen in Bezug auf eine Achse des Kunststoffvorformlings oder in Bezug auf eine Achse der Spreizeinrichtung bewegbar sind.

4. Behandlungsstation nach einem der Ansprüche 1 bis 3, wobei die mechanische Spreizeinrichtung eine oder mehrere Schiebhülse(n) (34) umfasst, womit durch ein Verschieben der Schiebehülse(n) eine Bewegung der Spreizeinrichtung ausführbar ist, die eine radiale Komponente umfasst, wobei die Schiebehülse(n) in Kombination mit Anspruch 2 insbesondere an der Reckstange (35) oder dem Füllrohr angeordnet ist (sind), und wobei in Kombination mit Anspruch 3 vorzugsweise jeweilige Enden der Spreizelemente an der Schiebehülse befestigt sind.

5. Behandlungsstation nach einem der Ansprüche 1 bis 4, wobei die Behandlungsstation weiterhin zum Einfüllen eines im Wesentlichen flüssigen Produkts oder wenigstens einer flüssigen oder festen Komponente des Produkts in die Zwischenform (32) und zum gleichzeitigen Ausbilden einer durch die Hohlform (31) vorgegebenen Endform des Kunststoffbehälters aus der Zwischenform.

6. Formfüllmaschine, umfassend:
eine Behandlungsstation (30) zur Formung eines Kunststoffbehälters nach einem der Ansprüche 1 bis 5.

7. Formfüllmaschine nach Anspruch 6, weiterhin umfassend:
einen Ofen zum Erwärmen des Kunststoffvorformlings.

8. Verfahren zum Formen eines Kunststoffbehälters, umfassend die Schritte:
Positionieren eines erwärmten Kunststoffvorformlings in einer Hohlform (31);
Einführen einer mechanischen Spreizvorrichtung (33, 34) in den positionierten Kunststoff-vorformling; und
Spreizen des Kunststoffvorformlings mit der Spreizeinrichtung (33, 34), wodurch eine Zwischenform (32) ausgebildet wird.

9. Verfahren nach Anspruch 8, wobei das Spreizen des Kunststoffvorformlings in mehrere unterschiedliche radiale Richtungen in Bezug auf eine Achse des Kunststoffvorformlings oder der Spreizeinrichtung erfolgt.

10. Verfahren nach Anspruch 8 oder 9, mit dem weiteren Schritt:
Recken des Kunststoffvorformlings in axialer Richtung mit einer Reckstange (35).

11. Verfahren nach einem der Ansprüche 8 bis 10, wobei das Spreizen des Kunststoffvor-formlings ein Ausbilden von einer oder mehreren Sicken in der Zwischenform (32) umfasst.

12. Verfahren nach einem der Ansprüche 8 bis 11, mit den weiteren Schritten:
Einfüllen eines im Wesentlichen flüssigen Produkts oder wenigstens einer flüssigen oder festen Komponente des Produkts in die Zwischenform (32), wodurch gleichzeitig die Endform des Kunststoffbehälters aus der Zwischenform ausgebildet wird;
wobei in Kombination mit Anspruch 10 aus der bzw. den Sicke(n) bevorzugt ein oder mehrere Versteifungsrippen in der Endform des Kunststoffbehälters ausgebildet werden.
